# EUROPÄISCHE PATENTANMELDUNG

(11) **EP 0 924 878 A2**
(43) Veröffentlichungstag der Anmeldung: **23.06.1999**
(21) Anmeldenummer: 98120396.1
(22) Anmeldetag: 28.10.1998
(51) Int. Cl.: H04B 7/26

(54) **Anordnung zum Synchronisieren von Funkbasisstationen**

(30) Priorität: 22.12.1997 DE 19757367
(71) Anmelder: SIEMENS AKTIENGESELLSCHAFT, 80333 München (DE)
(72) Erfinder: Heitmann, Jürgen, 81476 München (DE)

(57) **Zusammenfassung**

In einem Kommunikationsnetz sind zur Synchronisation von Funkbasisstationen BS1,..,BS5, die über eine Luftschnittstelle z.B. DECT/GAP mit Teilnehmerfunkeinrichtungen PP in Verbindung stehen, Synchronisationsfunkempfänger in den Funkbasisstationen vorhanden. Anhand eines an diese Synchronisationsfunkempfänger übermittelten periodischen Taktimpulses SYNC können sich die Funkbasisstationen hinreichend genau synchronisieren, so daß ein 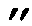 seamless handover" beim Wechsel der Verbindung von einer ersten Funkbasisstation BS3 zu einer Teilnehmerfunkeinrichtung PP auf eine Verbindung zwischen einer zweiten Funkbasisstation BS4 und der selben Teilnehmerfunkeinrichtung PP möglich ist.

## Beschreibung

Auf dem Gebiet der privaten Kommunikationssysteme sind unter der Bezeichnung CMI (cordless mobility integration) Systemkonfigurationen bekannt, bei denen im Teilnehmerbereich herkömmliche Schnurlosendgeräte eingesetzt werden, die jeweils aus einer, an eine Kommunikationsanlage angeschlossenen Basisstation und einem oder mehreren über eine Funkstrecke z.B. einer DECT-Luftschnittstelle, mit der Basisstation in Verbindung stehenden Mobilteilen bestehen.

Aufgrund der begrenzten Leistungsfähigkeit der Luftschnittstelle, insbesondere wegen der relativ geringen Sendeleistung, ist der Jeweilige Sende-/Empfangsbereich der Basisstationen auf einen definierten Bereich - der auch Zelle genannt wird - um die jeweilige Basisstation beschränkt. Diese Bereichsbegrenzung führt zunächst dazu, daß sich ein Teilnehmer mit seinem Mobilteil nicht aus dem Empfangs-/Sendebereich seiner Basisstation entfernen darf, ohne mit dem Verlust der Verbindung rechnen zu müssen.

Zur Vermeidung dieser Einschränkung ist es jedoch bereits bekannt, die Funkverbindung zwischen Basisstation und Mobilteil beim Verlassen der zur Basisstation gehörigen Zelle durch eine Verbindung zwischen dem Mobilteil und einer anderen Basisstation, in deren Empfangs-/Sendebereich das Mobilteil sich danach befindet, zu ersetzten. Dieses als 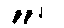 handover" bezeichnete und von der Kommunikationsanlage gesteuerte 'Weiterreichen' des Mobilteils setzt voraus, daß die beteiligten Basisstationen bezüglich der Luftschnittstelle zueinander synchron sind.

Zum Beispiel sind die bei einer DECT-Luftschnittstelle zu übertragenden Nutzdaten in sogenannten DECT-Zeitrahmen eingebettet, deren Beginn bei verschiedenen Basisstationen zur Durchführung eines unterbrechungsfreien Weitergebens ( 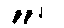 seamless handover") nur maximal zwei Mikrosekunden voneinander abweichen darf.

Aus der deutschen Offenlegungsschrift DE 30 11 935 A1 ist eine Anordnung zur Synchronisation von Funkkonzentratoren in einem mobilen Funknetz bekannt, bei der eine Synchronisation der Funkkonzentratoren mittels eines, von einem regionalen, terrestrischen Normalfunksender DCF77 gesendeten Zeitzeichens erfolgt.

Des weiteren ist für eine weltweit funktionierende Synchronisation der Kommunikationsanlagen und der mit diesen verbundenen Basisstationen in einem Kommunikationsnetz aus der europäischen Offenlegungsschrift EP 0 803 994 A2 bereits bekannt, jede Kommunikationsanlage mit einer Empfangs- und Verarbeitungseinheit entsprechend dem bekannten Satelliten-Navigationssystemes GPS (global positioning system) zu versehen und aus einer empfangenen Zeitinformation Synchronisationsimpulse abzuleiten. Die Synchronisation der an eine Kommunikationsanlage angeschlossenen Basisstationen untereinander erfolgt dabei drahtgebunden über die Verbindungsleitungen von der Kommunikationsanlage zu ihren Basisstationen.

Da an die Empfangs- und Verarbeitungseinheiten für das Satelliten-Navigationssystem im Sinne der Betriebssicherheit des Kommunikationsnetzes sehr hohe Qualitätsanforderungen gesetzt werden müssen, ist der zu erbringende Aufwand für die Synchronisation erheblich.

Aufgabe der vorliegenden Erfindung ist es, eine Anordnung zur Synchronisation von Kommunikationsanlagen und ihren Basisstationen insbesondere zum Zweck eines 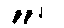 seamless handover" anzugeben, die mit einem gegenüber dem des genannten Standes der Technik geringeren Aufwand auskommt.

Gelöst wird die Aufgabe erfindungsgemäß durch die Merkmale des Patentanspruchs 1.

Vorteilhafte Weiterbildungen der Erfindung sind in den Unteransprüchen angegeben.

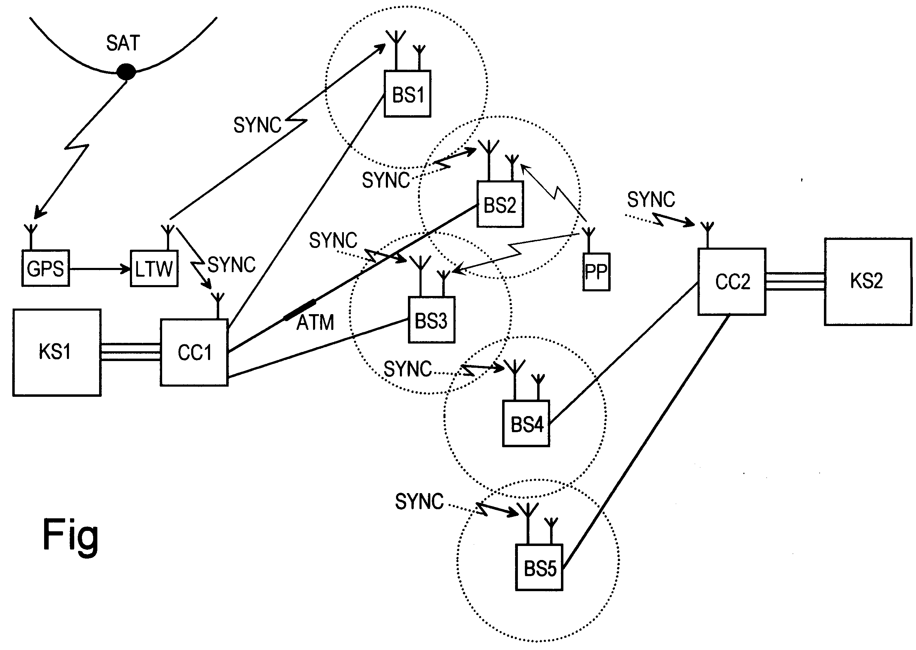

Ein Ausführungsbeispiel der Erfindung wird im Folgenden anhand der Zeichnungen näher erläutert. Dabei zeigt die Figur eine schematische Darstellung für ein eine auf der Erfindung basierende Anordnung aufweisendes Kommunikationsnetz.

Das Kommunikationsnetz wird durch zwei Kommunikationssysteme KS1, KS2 repräsentiert, die private Kommunikationssysteme, wie z.B. das bekannte Kommunikationssystem Hicom 300 der Firma Siemens, oder öffentliche Vermittlungssysteme sein können.

Die Kommunikationssysteme KS1, KS2 sind jeweils mit einer (Basisstations)-steuereinrichtung CC1 bzw. CC2 verbunden, die mit den dem jeweiligen Kommunikationssystem KS1, KS2 zugehörigen Basisstationen BS1,...,BS5 in Verbindung stehen.

Eine Anbindung von Schnurlosendgeräten an ein privates Kommunikationssystem wird als CMI (cordless mobility integration) System bezeichnet. Die Basisstationen BS1,...,BS5 sind z.B. bekannte Basisstationen von Schnurlosendgeräten, die eine Dect-Luftschnittstelle zwischen dem Basisteil und einem Mobilteil vorsehen.

Andererseits können die Basisstationen BS1, ..., BS5 aber auch Funkbasisstationen im Rahmen eines RLL/WLL-Systems (Radio in the Local Loop/Wireless in the Local Loop) sein, wobei die Steuereinrichtungen CC1, CC2 als Funkbasisstationskontrolleinrichtung (Radio Base Station Controller) anzusehen sind. Ein derartiges System ist z.B. aus der Produktschrift aus der Firma Siemens AG, "Dect Link Radio Access: Where Performance Counts", Dezember 1995, Order No. A 500 01-N7-P1-1-77600 bekannt. Dieses System ist im Wesentlichen den öffentlichen Systemen zuzuordnen.

Die Verbindungen zu den Basisstationen BS1,...,BS5 sind bei Netzen mit privaten Kommunikationssystemen meistens drahtgebunden, sie können aber auch insbesondere bei Netzen mit öffentlichen Vermittlungssystemen mit optischen Kabeln oder durch Funkverbindungen realisiert sein. Zu den Basisstationen BS1,..,BS5 werden Informationen üblicherweise im Zeitmultiplex-Verfahren übertragen, es können aber auch ATM (asynchron transfer mode), oder SDH (synchrone digitale hierarchy) Übertragungsverfahren zur Anwendung kommen, wobei die letzteren im Gegensatz zum Zeitmultiplex-Verfahren paketorientiert und damit nicht zeittransparent sind.

Jede der Basisstationen BS1,...BS5 repräsentiert eine sogenannte Funkzelle, deren Geometrie im Wesentlichen durch die Art der Luftschnittstelle definiert ist. Die Basisstationen BS1, ...BS5 sind deshalb zueinander so angeordnet, daß jede Stelle in einem zu überdeckenden Gebiet wenigstens in einer der Zellen liegt. Sobald ein Teilnehmer mit seinem Mobilteil PP die zu einer Basisstation, z.B. BS2, gehörige Zelle verläßt und in eine nächste Zelle, z.B. die Zelle der Basisstation BS3 eintritt, wird die Verbindung zwischen der Basisstation BS2 und dem Mobilteil PP durch eine Verbindung zwischen der Basisstation BS3 und dem Mobilteil PP ersetzt.

Ein derartiger Wechsel der Verbindung ist dabei nicht nur zwischen den Basisstationen BS1,..,BS3 die an das selbe Kommunikationssystem KS1 angeschlossen sind, vorgesehen, es ist auch ein Wechsel von einer Basisstation BS3 zu einer anderen Basisstation BS4 vorgesehen, wobei die beiden Basisstationen BS3, BS4 zu unterschiedlichen Kommunikationssystemen KS1, KS2 gehören.

Jede Basisstation BS1,..,BS5 erhält über ihren Leitungsanschluß zur Steuereinrichtung CC1; CC2 einen genauen und stabilen Takt von der ihr zugeordneten Steuereinrichtung CC1, CC2 bzw. von dem ihr zugeordneten Kommunikationssystem KS1, KS2. Auf diesen Takt synchronisieren die Basisstationen BS1,..,BS5 die Zeitrahmen der Luftschnittstelle. Auch die Kommunikationssysteme KS1, KS2 im selben Netz sind untereinander leitungsgebunden synchronisiert. Bei den derzeit gültigen Normen für die Synchronität, darf eine Taktinformation, die von einer die Synchronisationstaktinformation erzeugenden Einrichtung (nicht dargestellt) im Netz bis zu einer Steuereinrichtung CC1, CC2 gelangt, bereits einen Tageswander von 20 Mikrosekunden aufweisen. Aus diesem Grunde werden die an das selbe Kommunikationssystem KS1 angeschlossenen Basisstationen BS1,...,BS3 - bei zeittransparenten Verbindungen - zwar untereinander synchron sein, aber die Basisstationen BS4, BS5, die an einem benachbarten Kommunikationssystem KS2 angeschlossen sind, können hierzu Phasenabweichungen bis zu 20 Mikrosekunden aufweisen.

Aber selbst die Basisstationen BS1, BS2, BS3 die an das selbe Kommunikationssystem KS1 angeschlossen sind, können untereinander eine größere Phasenabweichung aufweisen oder sogar asynchron zu einander werden, wenn z.B. die Verbindungsleitungen zu den einzelnen Basisstationen unterschiedliche Laufzeiten oder unbekannte Laufzeiten aufweisen. Dies ist z.B. der Fall, wenn eine Basisstation BS2 über ATM oder SDH Übertragungsstrecken mit dem Kommunikationssystem KS1 verbunden sind. Die beiden letztgenannten Übertragungsstrecken sind im Gegensatz zu dem herkömmlich verwendeten Übertragungsverfahren des Zeitmultiplexbetriebs nicht zeittransparent, weshalb sie sich auch nicht zur Übermittlung von Synchronisationsinformation eignen.

Zur Realisierung bestimmter Leistungsmerkmale, z.B. einem 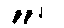 seamless handover", d.h. einem für den Benutzer eines Mobilteiles PP unbemerkten Wechsel der Verbindung zu einer anderen Basisstation BS3 ist eine gute Phasengleichlage der Senderahmen der Luftschnittstelle zwischen den beteiligten Basisstationen BS3, BS5 erforderlich, die z.B. bei CMI nur eine Zeittolleranz von wenigen Mikrosekunden erlaubt.

Gemäß einer Variante der Erfindung ist pro Netz ein GPS (global positioning system)-Empfänger GPS vorhanden, der einen Taktimpuls mit einer Periodendauer von 12 Sekunden abgibt. Dieser Taktimpuls wird einem kleinen Funksender LWT zugeführt. Dieser kleine Funksender LWT hat eine relativ geringe Sendeleistung, die vorzugsweise in einem langwelligeren Frequenzbereich liegt, und die geeignet ist, das Gebiet in dem sich das Kommunikationsnetz, d.h. insbesondere die Kommunikationssysteme KS1, KS2 und die Zellen der Basisstation BS1,...BS5, erstreckt abzudecken. Damit eine gute Durchdringung erreicht werden kann, ist wie bereits erwähnt, dem Langwellenbereich der Vorzug zu geben. Sowohl der GPS-Empfänger GPS als auch der kleine Funksender LWT können in einem der Kommunikationssysteme KS1, KS2 bzw. in einer der Steuereinrichtungen CC1, CC2 angeordnet sein.

Alle Basisstationen BS1,..,BS5 und alle Steuereinrichtungen CC1, CC2 für diese Basisstationen empfangen die von dem kleinen Funksender LWT übermittelten Taktimpuls SYNC von 12 Sekunden Periodendauer. Für den Fall, daß der kleine Funksender LWT in einer Steuereinrichtung CC1, CC2 angeordnet ist, kann zwischen dem kleinen Funksender LWT und der Steuereinrichtung CC1, CC2 eine drahtgebundene Übermittlung der Taktimpulse SYNC erfolgen. In allen anderen Fällen weisen die Basisstationen BS1, ..,BS5 und die Steuereinrichtungen CC1, CC2 jeweils einen Funkempfänger zum Empfang der von dem kleinen Funksender LWT übermittelten Taktimpulse SYNC auf. Anhand der empfangenen Taktimpulse SYNC stellen die Basisstationen BS1,..,BS5 und die Kontrolleinrichtungen CC1, CC2 unmittelbar den Beginn der Zeitrahmen für die Luftschnittstelle z.B. die DECT-Luftschnittstelle ein. Der Taktimpuls SYNC beginnt mit jeder vollen Minute nach UTC-Zeit (universal time coordinated), die von dem GPS-Empfänger GPS erkannt wird. Der Taktimpuls SYNC hat vorzugsweise eine Periodendauer von 12 Sekunden weil sich diese Periodendauer als kleinstes gemeinsames Vielfaches von unterschiedlichen Zeiten oder Zeitgliedern ergibt. Beginnend mit dem DECT-Zeitrahmen, der eine Länge von 10 Mikrosekunden aufweist und dem Dect-Überrahmen, der 16 Zeitrahmen beinhaltet, existiert ein weiterer Rahmen aus 5 Überrahmen, wonach sich bis jetzt eine Gesamtzeitdauer von 800 Mikrosekunden ergibt. Weiterhin existiert ein periodisches Zeitglied (Timer) in den Basisstationen, mit einer Zeitperiode von 600 Mikrosekunden. Aus den vorstehend genannten Zeiten von 800 Mikrosekunden und 600 Mikrosekunden ergibt sich zunächst eine Synchronpulszeit von 2,4 Sekunden. Da diese Zeit aber aus herkömmlichen GPS-Empfängern GPS, die nur einen Impuls pro Sekunde abgeben, nicht ohne weiteres abgeleitet werden kann, ergibt sich die Notwendigkeit ein Vielfaches von 2,4 Sekunden zu suchen, das nur ganze Sekunden aufweist, was zu der Periodendauer von 12 sek. (5 x 2,4 sek.) führt. Damit über unterschiedliche Hersteller und Einrichtungen ein Gleichlauf der Phase erreicht werden kann, muß ein gemeinsamer Beginn dieses 12 sek. Taktimpulses gefunden werden. Dies ist z.B. mit dem Beginn der vollen Minute nach UTC weltweit gegeben.

Bei einer derartigen Synchronisation empfangen also alle Basisstationen BS1,...,BS5 den periodischen Taktimpuls SYNC - mit äußerst kleiner Toleranz, die sich aus den unterschiedlichen Funklaufzeiten ergeben - gleichzeitig, so daß eine Synchronisation der Luftschnittstelle z.B. der Dect-Rahmen, mit der für ein 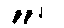 seamless handover" nötigen Toleranz von +/- 2 Mikrosekunden zwischen zwei benachbarten Basisstationen BS3, BS4 nicht überschritten wird.

Anstelle des GPS-Empfängers GPS und des kleinen Funksenders LWT, kann nach einer anderen Variante der Erfindung auch ein bestehender 'Zeitinformationssender' z.B. der bekannte Langwellensender DCF77, der in der Bundesrepublik zur Übermittlung der gültigen Zonenzeit und insbesondere zur Ansteuerung von Funkuhren dient, genutzt werden. Auch andere Navigationsfunksender, die Zeitzeichen senden, wie z.B. ADRET oder LORAN können vorgesehen werden. Der 12 Sekunden Taktimpuls SYNC kann auch bei den von derartigen Sendern übermittelten Zeitinformationen ohne weiteres aus dem Beginn der vollen Minute abgeleitet werden.

## Patentansprüche

1. Anordnung zum Synchronisieren von Funkbasisstationen (BS1,..,BS5), die jeweils mit einer zugehörigen Basisstationssteuereinrichtung (CC1, CC2) eines Kommunikationssystems (KS1, KS2) in einem Kommunikationsnetz verbunden sind und die über eine Luftschnittstelle (DECT/GAP) mit Teilnehmerfunkeinrichtungen (PP) in Verbindung stehen,
**dadurch gekennzeichnet,**
daß für die Funkbasisstationen BS1, ...,BS5 in dem Kommunikationsnetz ein gemeinsamer kommunikationsnetzindividueller, terrestrischer Synchronisationsfunksender (LWT) vorgesehen ist, der eine, eine Synchronisationsinformation auf einer Radiofrequenz übertragende Sendeeinheit und eine mit dieser verbundene, eine Weltzeitinformation empfangende und die Synchronisationsinformation daraus extrahierende Satellitennavigations-Empfängereinheit (GPS) aufweist, und daß die Funkbasisstationen (BS1,...;BS2) jeweils einen Synchronisationsfunkempfänger zum Empfang einer von dem terrestrischen Synchronisationsfunksender (LWT) übermittelten Synchronisationsinformation aufweisen.

2. Anordnung nach Anspruch 1,
**dadurch gekennzeichnet,**
daß die Radiofrequenz im Langwellenbereich angeordnet ist.

3. Anordnung nach einem der vorhergehenden Ansprüche,
**dadurch gekennzeichnet,**
daß die Synchronisationsinformation ein Taktimpuls mit der Periodendauer von 12 sek. darstellt, dessen Beginn identisch ist mit dem Beginn einer Minute.
